# EUROPÄISCHE PATENTSCHRIFT

(11) **EP 2 955 417 B1**
(45) Veröffentlichungstag und Bekanntmachung des Hinweises auf die Patenterteilung: **12.08.2020**
(21) Anmeldenummer: 15169861.0
(22) Anmeldetag: 29.05.2015
(51) Int. Cl.: F16H 35/10, B60K 6/48, F16D 7/02, F16H 3/093, B60K 6/387, B60K 6/547, F16D 43/21, F16H 3/00

(54) **HYBRID-KRAFTFAHRZEUGGETRIEBEANORDNUNG**
HYBRID MOTOR VEHICLE TRANSMISSION ASSEMBLY
SYSTÈME DE TRANSMISSION DE VÉHICULE HYBRIDE

(30) Priorität: 11.06.2014 DE 102014108181
(43) Veröffentlichungstag der Anmeldung: 16.12.2015
(73) Patentinhaber: Magna PT B.V. & Co. KG, 74199 Untergruppenbach (DE)
(72) Erfinder: Schweiher, Mark, 74348 Lauffen (DE); Hoffmeister, Thomas, 70825 Korntal-Münchingen (DE); Ihben, Harald, 71640 Ludwigsburg (DE)
(74) Vertreter: Rausch, Gabriele

(56) Entgegenhaltungen:
- EP-A1- 2 385 270
- WO-A1-2012/164647
- DE-A1-102005 002 993
- DE-A1-102009 037 557
- JP-A- 2010 127 382

## Beschreibung

Die vorliegende Erfindung betrifft eine Hybrid-Kraftfahrzeuggetriebeanordnung mit einem Zahnradgetriebe zur Einrichtung von wenigstens einer Übersetzung zwischen einem Getriebeeingang und einem Getriebeausgang, wobei das Zahnradgetriebe einen Getrieberadsatz mit einem Koppelzahnrad aufweist, mit einer elektrischen Maschine, die eine Maschinenausgangswelle mit einem Antriebszahnrad aufweist, das direkt oder über einen Koppelradsatz mit dem Koppelzahnrad des Getrieberadsatz gekoppelt ist, derart, dass ein Leistungsübertragungspfad von der Maschinenausgangswelle zu dem Koppelzahnrad eingerichtet ist.

Eine derartige Hybrid-Kraftfahrzeuggetriebeanordnung ist aus dem Dokument DE 10 2012 009 484 C bekannt. Hier ist das Zahnradgetriebe ein Doppelkupplungsgetriebe mit einer Mehrzahl von Übersetzungen. Die elektrische Maschine wird über das Koppelzahnrad an einen Eingang von einem der Teilgetriebe des Doppelkupplungsgetriebes angebunden. Bei diesem Aufbau sind verschiedene Hybrid-Modi realisierbar, einschließlich einem rein elektrischen Fahren, einem Boost-Betrieb, einer Rekuperation, etc. Die Anbindung der elektrischen Maschine an ein Koppelzahnrad eines Getrieberadsatzes kann eine axial kompakte Bauweise der Getriebeanordnung gewährleisten, da für die Anbindung der elektrischen Maschine kein separates Zahnrad in dem Zahnradgetriebe vorzusehen ist.

Aus dem Dokument EP 2 385 270 A1 ist eine Hybrid- Kraftfahrzeuggetriebeanordnung mit einem Zahnradgetriebe bekannt, wobei das Zahnradgetriebe einen Getrieberadsatz mit einem Koppelzahnsatz aufweist, wobei eine elektrische Maschine eine Maschinenausgangswelle mit einem Antriebszahnrad aufweist, das über einen Koppelsatz mit dem Koppelzahnrad des Getrieberadsatzes derart gekoppelt ist, dass ein Leistungsübertragungspfad von der Maschinenausgangswelle zu dem Koppelzahnrad eingerichtet ist.

In der DE 10 2005 002993 A1 wird ein Verfahren für das Steuern eines Motor/Antriebsstrangs eines Fahrzeugs während eines plötzlichen Bremsvorgangs Motor/Antriebsstrang übertragenen reaktiven Raddrehmoments umfasst. Der Betrag des auf den Motor/Antriebsstrang übertragenen reaktiven Drehmoments wird durch Verwenden einer Rutschkupplung in dem Antriebsstrang begrenzt, welche automatisch rutscht, wenn das darauf ausgeübte reaktive Drehmoment einen vorgewählten Wert erreicht.

Die WO 2012164647 A1 zeigt eine Fahrzeugdrehmomentbegrenzungseinrichtung, die zwischen einem Elektromotor und einem Antriebsrad vorgesehen ist, wobei das Grenzdrehmoment leicht sichergestellt werden kann.

JP 2010-127382 A1 zeigt eine Rutschkupplung mit einer Reibkonuspaarung, die zwischen einer elektrischen Maschine und dem Antriebsstrang angeordnet ist.

In jedem Fall sind die Komponenten der Hybrid-Kraftfahrzeuggetriebeanordnung dazu ausgelegt, die jeweils maximal auftretenden Kräfte bzw. Momente aufnehmen zu können. Da die gegebenenfalls auftretenden Kräfte bzw. Momente hoch sein können, sind die einzelnen Komponenten relativ groß dimensioniert.

Vor diesem Hintergrund ist es eine Aufgabe der Erfindung, eine verbesserte Hybrid-Kraftfahrzeuggetriebeanordnung anzugeben, die es ermöglicht, wenigstens eine Komponente kleiner zu dimensionieren und/oder es ermöglicht, wenigstens eine Komponente vor einer Überlast zu schützen, wobei eine optimale Rutschkupplung eingesetzt wird.

Die obige Aufgabe wird bei der eingangs genannten Hybrid-Kraftfahrzeuggetriebeanordnung dadurch gelöst, dass in dem Leistungsübertragungspfad eine Rutschkupplung angeordnet ist.

Durch die Rutschkupplung kann ein Überlastungsschutz des Zahnradgetriebes erreicht werden, und zwar insbesondere jenes Radsatzes, der die elektrische Maschine mit dem Zahnradgetriebe verbindet. Ferner können die im Leistungsfluss befindlichen Komponenten so ausgelegt bzw. dimensioniert werden, dass sie nicht alle möglicherweise auftretenden Kräfte bzw. Kraft- oder Drehmomentspitzen ertragen müssen. Vielmehr können die Bauteile vorzugsweise so dimensioniert bzw. ausgelegt werden, dass sie im Wesentlichen ein Drehmoment übertragen bzw. ertragen können, das sich an einem charakteristischen Moment (beispielsweise Nennmoment) der elektrischen Maschine orientiert.

Denn in Hybrid-Kraftfahrzeuggetriebeanordnungen der eingangs genannten Art können bei abrupten Verzögerungen am Getriebeausgang und aufgrund der Trägheit der elektrischen Maschine große Reaktionsmomente entstehen. Diese Reaktionsmomente können ein Mehrfaches der Nennmomente betragen. Durch die Maßnahme, in dem Leistungsübertragungspfad eine Rutschkupplung anzuordnen, können die Komponenten gegen eine Überlastung geschützt werden, die zu ihrer Beschädigung führen könnte.

Die oben genannten Reaktionsmomente können beispielsweise durch verschiedene Bremsmanöver und/oder beim Verriegeln einer Parksperre auftreten, da hierbei ein abruptes Verzögern des Getriebeausganges entstehen kann.

Die elektrische Maschine kann außen an dem Zahnradgetriebe angeflanscht sein, kann jedoch auch im Getriebe angeordnet sein, also innerhalb eines Gehäuses des Zahnradgetriebes integriert sein. Die elektrische Maschine kann hierbei gekühlt sein.

Durch die Maßnahme, in dem Leistungsübertragungspfad eine Rutschkupplung anzuordnen, können involvierte Bauteile gegebenenfalls kleiner dimensioniert werden, und zwar beispielsweise hinsichtlich Wellendurchmesser, hinsichtlich Zahnradbreiten, hinsichtlich Zahnrad- und/oder Wellenmaterialien, hinsichtlich Lagerbaugrößen, etc.

Es versteht sich, dass in dem Leistungsübertragungspfad vorzugsweise keine weitere Kupplung, wie beispielsweise eine Zuschaltkupplung, angeordnet ist, obgleich es denkbar ist, eine solche Zuschaltkupplung seriell oder parallel zu der Rutschkupplung anzuordnen.

Das Zahnradgetriebe ist vorzugsweise ein Doppelkupplungsgetriebe, könnte jedoch auch ein Achsgetriebe sein, ein Wandler-Automatikgetriebe oder dergleichen.

Die Rutschkupplung ist vorzugsweise eine drehmoment-schaltende Kupplung, insbesondere eine Reibkupplung, die betrieblich auf einen bestimmten Kraftschluss ausgelegt ist. Die Rutschkupplung ist vorzugsweise eine passive, selbsttätig schaltende Kupplung, im Gegensatz zu aktuatorbetätigten Kupplungen. Es versteht sich, dass die Rutschkupplung vorzugsweise dazu ausgebildet ist, Drehmoment bis zu einem Drehmoment-Schwellenwert übertragen zu können, und bei anliegenden Drehmomenten, die größer sind als der Drehmoment-Schwellenwert, öffnet, also zumindest den über den Schwellenwert überschießenden Anteil des Drehmomentes nicht überträgt.

Der Drehmoment-Schwellenwert ist so ausgelegt, dass die über den Leistungsübertragungspfad übertragenen Drehmomente im normalen Betrieb diesen Schwellenwert nicht überschreiten. Der Schwellenwert ist jedoch kleiner als ein Drehmoment, das beispielsweise in Form eines Reaktionsmomentes bei einem abrupten Verzögern des Getriebeausgangs entstehen kann. Insgesamt ist es ferner vorteilhaft, dass die Rutschkupplung wenigstens eine Reibkonuspaarung aufweist.

Über eine derartige Reibkonuspaarung bzw. ein Reibkegelsystem lässt sich eine Rutschkupplung zum einen kostengünstig herstellen. Ferner lässt sich eine derartige Reibkonuspaarung vergleichsweise einfach und kompakt in den Leistungsübertragungspfad integrieren.

Der Kegel- bzw. Konuswinkel der Reibkonuspaarung ist vorzugsweise kleiner als 20°, insbesondere kleiner als 10°, und ist vorzugsweise größer als 3°, insbesondere größer als 5°.

Hierbei ist es vorteilhaft, dass die Reibkonuspaarung einen ersten Reibkonus an einem ersten Drehmomentübertragungsglied und einen zweiten Reibkonus an einem zweiten Drehmomentübertragungsglied aufweist, wobei das erste und das zweite Drehmomentübertragungsglied über eine Federeinrichtung vorgespannt sind.

Der Drehmoment-Schwellenwert kann hierbei eingestellt werden durch Wahl des Kegel- bzw. Konuswinkels, durch Höhe der Vorspannung (die insbesondere in axialer Richtung verläuft), sowie ferner durch die Größe und das Material sowie Oberflächenbeschaffenheit des ersten und des zweiten Reibkonus.

Kegelige Sitze und Ringe können dabei auf eine Art und Weise realisiert werden, wie es auch in Synchron-Schaltkupplungen von Fahrzeuggetrieben üblich ist, beispielsweise unter Verwendung von kegeligen Reibringen, die aus Messing oder dergleichen hergestellt sind. Die Federeinrichtung kann insbesondere eine ringförmige Tellerfedereinrichtung sein, wobei es sich hierbei vorzugsweise um ein Standard-Bauteil handelt, um die Kosten zu reduzieren.

Die Federeinrichtung stützt sich in axialer Richtung vorzugsweise an einem radial vorspringenden Abschnitt ab, der axial fest und vorzugsweise drehfest mit einer Welle verbunden ist. Besonders bevorzugt ist es, wenn die Federeinrichtung sich in axialer Richtung an einem weiteren Zahnrad abstützt, das an der Welle festgelegt ist.

Ferner ist es hierbei vorteilhaft, dass das erste Drehmomentübertragungsglied ein Reibkonusring ist, wobei das zweite Drehmomentübertragungsglied ein Reibkonus-Zahnrad ist, insbesondere das Antriebszahnrad oder ein Zahnrad des Koppelradsatzes.

Hierdurch kann die Reibkonuspaarung mit wenigen zusätzlichen Bauteilen realisiert werden, da eines der Drehmomentübertragungsglieder ein Zahnrad ist, das ohnehin zur Verbindung der elektrischen Maschine und des Koppelzahnrades vorhanden ist. Es versteht sich jedoch, dass das Reibkonus-Zahnrad angepasst ist, indem daran ein Reibkonus ausgebildet oder daran festgelegt ist.

Von besonderem Vorzug ist es, wenn die Rutschkupplung als Überlast-Schutzkupplung ausgebildet ist, derart, dass die Rutschkupplung Drehmoment bis zu einem Drehmoment-Schwellenwert übertragen kann, der eine Funktion eines charakteristischen Drehmomentwertes der elektrischen Maschine ist.

Insbesondere ist der charakteristische Drehmomentwert ein Nenndrehmoment der elektrischen Maschine, kann jedoch auch ein Maximalmoment der elektrischen Maschine sein.

In jedem Fall ist die Rutschkupplung so auszulegen, dass Nennmomente des Leistungsübertragungspfades sicher übertragen werden können.

Gemäß einer weiteren Ausführungsform ist die Rutschkupplung als Überlast-Schutzkupplung ausgebildet, derart, dass die Rutschkupplung Drehmoment bis zu einem Drehmoment-Schwellenwert übertragen kann, der eine Funktion eines Koppelzahnrad-Maximaldrehmomentes ist.

Mit anderen Worten kann der Schwellenwert sich auch danach ausrichten, wie hoch das maximale Drehmoment ist, das über das Koppelzahnrad übertragen werden kann. Vorzugsweise hängt der Schwellenwert sowohl hiervon als auch von einem charakteristischen Drehmomentwert der elektrischen Maschine ab.

Gemäß einer weiteren bevorzugten Ausführungsform ist zwischen der Maschinenausgangswelle und dem Koppelzahnrad eine Koppel-Übersetzung eingerichtet, wobei der Drehmoment-Schwellenwert eine Funktion der Koppel-Übersetzung ist.

Vielfach ist die Koppel-Übersetzung dazu ausgebildet, hohe Drehzahlen der elektrischen Maschine in geringere Drehzahlen des Koppelzahnrades umzusetzen, so dass die elektrische Maschine vorzugsweise in höheren Drehzahlbereichen betrieben werden kann. Hierdurch kann die elektrische Maschine in der Regel kompakter ausgebildet werden.

Der Drehmoment-Schwellenwert hängt dabei vorzugsweise nicht nur von der Koppel-Übersetzung ab, sondern auch davon, wo die Rutschkupplung innerhalb des Leistungsübertragungspfades angeordnet ist, also beispielsweise im Bereich der Maschinenausgangswelle oder im Bereich des Koppelzahnrades, oder in einem Bereich dazwischen.

In einer Variante ist das Reibkonus-Zahnrad starr mit einer Welle verbunden. In diesem Fall ist der Reibkonusring generell verdrehbar in Bezug auf die Welle angeordnet und wird mittels der Federeinrichtung gegen den Reibkonus des Reibkonus-Zahnrades angedrückt. Ein derartiges einfaches Reibkegelsystem kann beispielsweise verwendet werden, wenn der Drehmoment-Schwellenwert relativ niedrig ist.

In einer alternativen Ausführungsform ist der Reibkonusring drehfest mit einem Wellenabschnitt einer Welle verbunden, ist jedoch vorzugsweise axial verschieblich in Bezug auf den Wellenabschnitt gelagert.

Bei dieser Ausführungsform ist das Reibkonus-Zahnrad vorzugsweise verdrehbar in Bezug auf den Wellenabschnitt gelagert, und/oder kann axial an dem Wellenabschnitt gesichert sein.

Während bei der Ausführungsform, bei der das Reibkonus-Zahnrad drehfest mit der Welle verbunden ist, der Reibkonus vorzugsweise an einem Außenumfangsabschnitt des Reibkonus-Zahnrades ausgebildet ist, ist es bei der vorliegenden Variante bevorzugt, wenn der Reibkonus des Reibkonus-Zahnrades an einem Innenumfang des Reibkonus-Zahnrades ausgebildet ist.

Der Reibkonusring ist dabei in radialer Richtung vorzugsweise zwischen dem Reibkonus-Zahnrad und dem Wellenabschnitt angeordnet.

Wie oben erwähnt, ist es generell denkbar, dass die Rutschkupplung durch eine einzelne Reibkonuspaarung gebildet ist.

Von besonderem Vorzug ist es jedoch, wenn das Reibkonus-Zahnrad zwei Reibkoni aufweist, denen jeweils ein drehfest mit dem Wellenabschnitt verbundener Reibkonusring zugeordnet ist.

Die Reibkonusringe sind dabei vorzugsweise axial in Bezug auf den Wellenabschnitt verschieblich gelagert.

Bei dieser Ausführungsform wird die Rutschkupplung durch ein Doppelkegelsystem gebildet.

Die Reibkoni des Reibkonus-Zahnrades sind vorzugsweise unter entgegengesetzten Winkeln in Bezug auf eine Wellenachse angeordnet, also in einer Art X-Anordnung.

Generell ist es denkbar, jedem der Reibkonusringe eine eigene Federeinrichtung zuzuordnen, mittels denen die Reibkonusringe in entgegengesetzte axiale Richtungen hin zu den Reibkoni des Reibkonus-Zahnrades vorgespannt werden.

Von besonderem Vorzug ist es jedoch, wenn einer der Reibkonusringe axial an dem Wellenabschnitt gesichert ist, wobei die Federeinrichtung zwischen dem anderen Reibkonusring und einem mit dem Wellenabschnitt verbundenen Radialabschnitt angeordnet ist.

Bei dieser Ausführungsform wird lediglich eine einzelne Federeinrichtung verwendet, um die axiale Vorspannung der Rutschkupplung zu realisieren. Der Radialabschnitt, der mit dem Wellenabschnitt verbunden ist, ist vorzugsweise ein Radialabschnitt eines mit dem Wellenabschnitt verbundenen Zahnrades.

Insgesamt ist es ferner vorteilhaft, wenn das Reibkonus-Zahnrad ein an der Maschinenausgangswelle gelagertes Antriebszahnrad ist.

In einer alternativen Ausführungsform weist der Koppelradsatz ein erstes Zwischen-Zahnrad sowie ein zweites Zwischen-Zahnrad auf, das koaxial zu dem ersten Zwischen-Zahnrad angeordnet ist, wobei das Reibkonus-Zahnrad das erste und/oder das zweite Zwischen-Zahnrad ist.

Bei dieser Ausführungsform weist der Koppelradsatz vorzugsweise eine Zwischen-Welle auf, an der die zwei Zwischen-Zahnräder angeordnet sind, wobei vorzugsweise das eine von den zwei Zwischen-Zahnrädern das Reibkonus-Zahnrad ist und wobei das andere Zwischen-Zahnrad vorzugsweise drehfest und insbesondere einstückig mit der Zwischen-Welle ausgebildet ist.

Die erfindungsgemäße Rutschkupplung kann insbesondere das übertragbare Drehmoment im Leistungsübertragungspfad begrenzen. Die Lösung stellt vorzugsweise einen Schutz von Getriebebauteilen mit geringerem Zusatzgewicht dar, gegenüber einer Verstärkung der Getriebebauteile zum Ertragen einer höheren Belastung, die aus den Reaktionsmomenten der großen Massenträgheiten resultieren würde. Die erfindungsgemäße Lösung mit Rutschkupplung kann folglich auch Kostenvorteile haben.

Die Rutschkupplung kann anstelle einer Reibkonuspaarung auch eine Lamellenkupplung aufweisen. Die axialen Vorspannkräfte sind hierbei kleiner als bei einem oder mehreren Reibkonuspaarungen, wohingegen eine aufwändigere DrehMitnahme über innen- und außenliegende Steckverzahnungen notwendig ist. Die Rutschkupplung kann auch durch Mehrkegel-Reibsysteme gebildet werden, wobei die axialen Vorspannkräfte in diesem Fall kleiner sein können. Anstelle einer Tellerfeder können auch zylindrische Druckfedern oder Biegefedern verwendet werden.

Vorzugsweise ist die Rutschkupplung an einer Zwischen-Welle vorgesehen, an der zwei Zahnräder gelagert sind. Ein Zahnrad kann über Nadellager auf der Zwischen-Welle gelagert sein, die insbesondere als Doppelradwelle ausgebildet ist. Eines der Räder kann auch als Hohlwellenrad ausgebildet sein, wodurch das Rad die Zwischen-Welle bildet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 : eine schematische Darstellung eines Antriebsstranges eines Kraftfahrzeuges mit einer Ausführungsform einer erfindungsgemäßen Hybrid-Kraftfahrzeuggetriebeanordnung, wobei eine elektrische Maschine über einen Koppelradsatz mit einem Koppelzahnrad gekoppelt ist;
Fig. 2 : eine alternative Ausführungsform eines Koppelradsatzes;
Fig. 3 : eine Längsschnittansicht durch eine Zwischen-Welle mit einer Rutschkupplung;
Fig. 4: eine der Fig. 3 vergleichbare Darstellung einer Maschinenausgangswelle mit einer Rutschkupplung; und
Fig. 5 : eine Längsschnittansicht durch eine weitere Ausführungsform einer Zwischen-Welle mit einer Rutschkupplung.

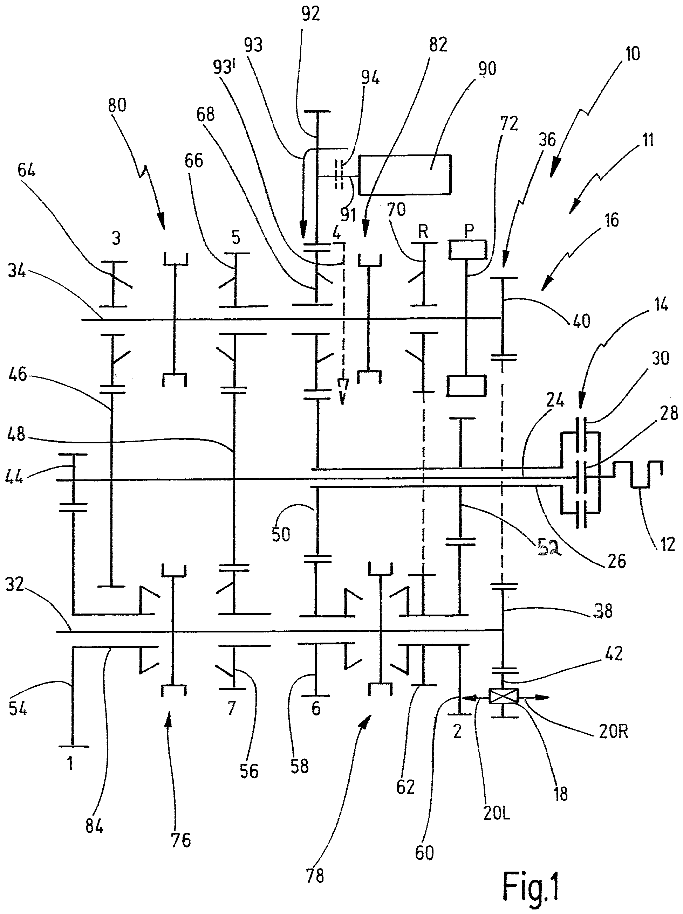

In Fig. 1 ist in schematischer Form ein Antriebsstrang 10 für ein Kraftfahrzeug 11 dargestellt.

Der Antriebsstrang 10 beinhaltet einen Antriebsmotor 12 wie einen Verbrennungsmotor, dessen Abtriebswelle mit dem Eingang einer Doppelkupplungsanordnung 14 verbunden ist. Die Ausgänge der Doppelkupplungsanordnung 14 sind mit der Eingangsanordnung eines Doppelkupplungsgetriebes 16 verbunden. Ein Ausgang des Doppelkupplungsgetriebes 16 ist mit einem Differential 18 verbunden, das Antriebsleistung auf zwei angetriebene Räder 20L, 20R verteilt.

Der Antriebsstrang ist für den Quereinbau, insbesondere für den Front-Quereinbau in dem Kraftfahrzeug 11, ausgelegt.

Das Doppelkupplungsgetriebe 16 beinhaltet eine erste Eingangswelle 24, die als Vollwelle ausgebildet ist, sowie eine zweite Eingangswelle 26, die als Hohlwelle konzentrisch zu der ersten Eingangswelle 24 ausgebildet ist. Die erste Eingangswelle 24 ist mit einem Ausgangsglied der ersten Kupplung 28 der Doppelkupplungsanordnung 14 verbunden. Die zweite Eingangswelle 26 ist mit einem Ausgangsglied einer zweiten Kupplung 30 der Doppelkupplungsanordnung 14 verbunden.

Das Doppelkupplungsgetriebe 16 weist ferner eine erste Vorgelegewelle 32 und eine zweite Vorgelegewelle 34 auf, die jeweils parallel versetzt zu den Eingangswellen 24, 26 angeordnet sind. Die Vorgelegewellen 32, 34 sind über einen Abtriebsradsatz 36 mit dem Differential 18 verbunden. Der Abtriebsradsatz 36 beinhaltet ein erstes Festrad 38, das mit der ersten Vorgelegewelle 32 verbunden ist, sowie ein weiteres Festrad 40, das mit der zweiten Vorgelegewelle 34 verbunden ist. Die beiden Festräder 38, 40 stehen in Eingriff mit dem Antriebsrad 42 des Differentials 18.

An der ersten Getriebeeingangswelle 24 sind, von einem dem Getriebeeingang entgegengesetzten axialen Ende des Doppelkupplungsgetriebes 16 aus gesehen, ein erstes Festrad 44 für die Vorwärtsgangstufe 1, ein zweites Festrad 46 für die Vorwärtsgangstufe 3 sowie ein drittes Festrad 48 für die Vorwärtsgangstufen 5, 7 festgelegt. In entsprechender Weise ist von dem dem Getriebeeingang entgegengesetzten axialen Ende aus gesehen an der zweiten Eingangswelle 26 ein erstes Festrad 50 für die Vorwärtsgangstufen 4, 6 sowie ein zweites Festrad 52 für die Vorwärtsgangstufe 2 sowie für die Rückwärtsgangstufe R festgelegt.

An der ersten Vorgelegewelle 32 sind, wiederum von dem dem Getriebeeingang entgegengesetzten Ende aus gesehen, ein erstes Losrad 54 für die Vorwärtsgangstufe 1, ein weiteres Losrad 56 für die Vorwärtsgangstufe 7, ein weiteres Losrad 58 für die Vorwärtsgangstufe 6 sowie ein weiteres Losrad 60 für die Vorwärtsgangstufe 2 drehbar gelagert. Das Losrad 60 für die Vorwärtsgangstufe 2 ist mit einem Nebenzahnrad 62 fest verbunden, das zur Einrichtung der Rückwärtsgangstufe R dient, wie nachstehend erläutert wird.

An der zweiten Vorgelegewelle 34 sind, wiederum von dem dem Getriebeeingang entgegengesetzten axialen Ende aus gesehen, ein erstes Losrad 64 für die Vorwärtsgangstufe 3, ein weiteres Losrad 66 für die Vorwärtsgangstufe 5, ein weiteres Losrad 68 für die Vorwärtsgangstufe 4 sowie ein weiteres Losrad 70 für die Rückwärtsgangstufe R drehbar gelagert.

Die Festräder 38, 40 des Abtriebsradsatzes 36 sind benachbart zu dem Getriebeeingang angeordnet, wobei an der zweiten Vorgelegewelle 34 zwischen dem Festrad 40 und dem Losrad 70 für die Rückwärtsgangstufe R ein Parksperrenrad 72 festgelegt ist. Das Parksperrenrad 72 ist in axialer Richtung mit dem Losrad 60 für die Vorwärtsgangstufe 2 ausgerichtet.

Zwischen den Losrädern 54, 56 ist ein erstes Schaltkupplungspaket 76 mit zwei Schaltkupplungen zum Ein- und Auslegen der Vorwärtsgangstufen 1, 7 angeordnet. Zwischen den Losrädern 58, 60 für die Vorwärtsgangstufen 6, 2 ist ein zweites Schaltkupplungspaket 78 zum Ein- und Auslegen dieser Vorwärtsgangstufen angeordnet.

An der zweiten Vorgelegewelle 34 ist zwischen dem Losrad 64 für die Vorwärtsgangstufe 3 und dem Losrad 66 für die Vorwärtsgangstufe 5 ein drittes Schaltkupplungspaket 80 zum Ein- und Auslegen dieser Vorwärtsgangstufen angeordnet. Schließlich ist an der zweiten Vorgelegewelle 34 zwischen dem Losrad 68 für die Vorwärtsgangstufe 4 und dem Losrad 70 für die Rückwärtsgangstufe R ein viertes Schaltkupplungspaket 82 zum Ein- und Auslegen dieser Gangstufen angeordnet.

Das Festrad 44 steht in Eingriff mit dem Losrad 54. Das Festrad 46 steht in Eingriff mit dem Losrad 64. Das Festrad 48 steht in Eingriff mit den Losrädern 56, 66. Das Festrad 50 steht in Eingriff mit den Losrädern 58, 68. Das Festrad 52 steht in Eingriff mit dem Losrad 60.

Das Nebenzahnrad 62 steht in Eingriff mit dem Losrad 70 für die Rückwärtsgangstufe R, um auf diese Weise eine Drehrichtungsumkehr zu erzielen, ohne eine separate Nebenwelle vorsehen zu müssen.

Der Radsatz 46, 64 für die Vorwärtsgangstufe 3 ist in axialer Richtung zwischen dem Radsatz 54, 44 für die Vorwärtsgangstufe 1 und dem Schaltkupplungspaket 76 angeordnet. Zu diesem Zweck ist das Losrad 54 über einen Wellenstummel 84 mit dem ersten Schaltkupplungspaket 76 verbunden.

Das Parksperrenrad 72 dient zum Einrichten einer Parksperrenanordnung P, die beispielsweise eine nicht näher gezeigte Parksperrenklinke aufweist.

Bei dem Doppelkupplungsgetriebe 16 werden zwei Doppelnutzungen für die Gangstufen 5, 7 bzw. 4, 6 realisiert. Ferner ist das Parksperrenrad 72 mit dem Losrad 60 für die Vorwärtsgangstufe 2 axial ausgerichtet. Insgesamt kann auf diese Weise eine axial kompakte Bauweise erzielt werden. Über das Nebenzahnrad 62 kann eine geeignete Übersetzung für die Rückwärtsgangstufe R eingestellt werden.

An das Losrad 68 für die Vorwärtsgangstufe 4 ist eine elektrische Maschine 90 angebunden. Dieses Losrad 68 dient daher zur Hybridisierung des Doppelkupplungsgetriebes 16. Die elektrische Maschine 90 weist eine Ausgangswelle 91 auf, die parallel zu den Wellen 24, 26, 32, 34 ausgerichtet und mit einem Zahnrad 92 verbunden ist. Das Zahnrad 92 steht in Eingriff mit dem Losrad 68 für die Vorwärtsgangstufe 4, so dass ein Leistungsübertragungspfad 93 von der Ausgangswelle 91 zu dem Losrad 68 gebildet wird, das vorliegend ein Koppelzahnrad bildet. Das Antriebszahnrad 92 ist bei dieser Ausführungsform direkt mit dem Koppelzahnrad (Losrad 68) gekoppelt. Alternativ hierzu ist es auch möglich, das Antriebszahnrad 92 mit einem anderen Zahnrad des Doppelkupplungsgetriebes 16 zu koppeln. Beispielhaft ist gezeigt, dass das Antriebszahnrad 92 auch mit dem ersten Festrad 50 in Eingriff stehen kann, so dass dieses ein Koppelzahnrad bildet. In diesem Fall wird von der Maschinenausgangswelle 91 hin zu dem Zahnrad 50 ein Leistungsübertragungspfad 93' gebildet.

Alternativ hierzu ist es möglich, die Maschinenausgangswelle 91 mit einem Antriebszahnrad zu verbinden, das über ein Zwischen-Zahnrad mit dem Losrad 68 in Verbindung steht, um auf diese Weise einen Koppelradsatz zu bilden, der durch das Antriebszahnrad und das Zwischen-Zahnrad gebildet ist.

In dem Leistungsübertragungspfad 93 ist eine Rutschkupplung 94 angeordnet, die in Fig. 1 schematisch dargestellt ist, und zwar an der Maschinenausgangswelle 91. Die Rutschkupplung 94 kann jedoch auch an einer beliebigen anderen Stelle des Leistungsübertragungspfades 93 angeordnet sein.

Die Rutschkupplung 94 ist als Überlast-Schutzkupplung ausgebildet, wobei die Rutschkupplung 94 Drehmoment bis zu einem Drehmoment-Schwellenwert übertragen kann, der eine Funktion eines charakteristischen Drehmomentwertes der elektrischen Maschine 90, eine Funktion eines Maximaldrehmomentes des Koppelzahnrades 68 (oder beispielsweise 50) und/oder eine Funktion einer Koppel-Übersetzung ist, wobei die Koppel-Übersetzung zwischen der Maschinenausgangswelle 91 und dem Koppelzahnrad 68 (oder 50) gebildet ist. Im letzteren Fall hängt der Drehmoment-Schwellenwert auch davon ab, wo die Rutschkupplung 94 innerhalb des Leistungsübertragungspfades 93 angeordnet ist.

In den nachfolgenden Figuren sind weitere Ausführungsformen von Kraftfahrzeuggetriebeanordnungen oder Teilen hiervon dargestellt, die hinsichtlich Aufbau und Funktionsweise generell der oben beschriebenen Anordnung entsprechen. Gleiche Elemente sind daher durch gleiche Bezugszeichen gekennzeichnet. Im Folgenden werden im Wesentlichen die Unterschiede erläutert.

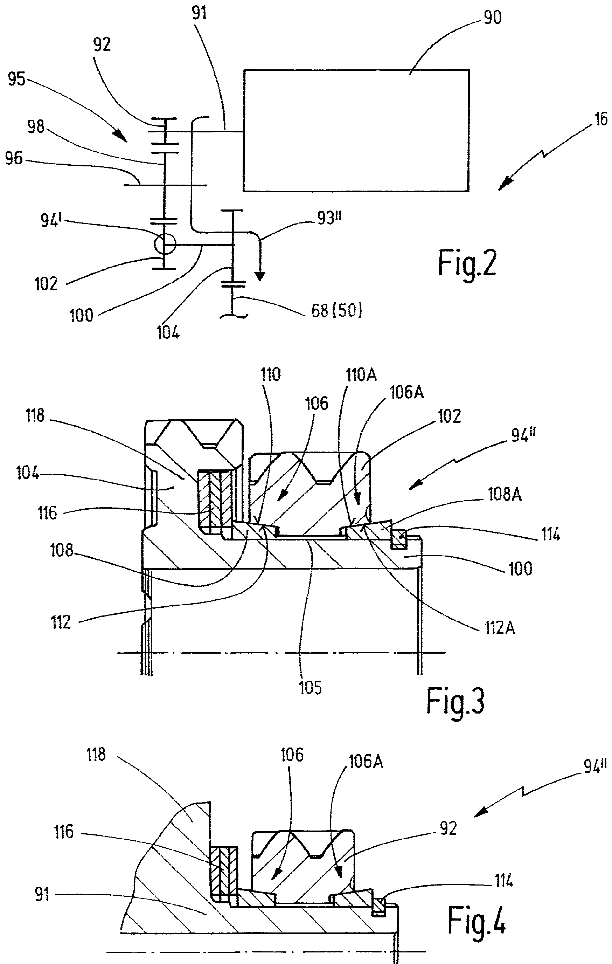

Fig. 2 zeigt eine Anbindung einer elektrischen Maschine 90 an ein Koppelzahnrad 68 (oder 50) über einen Leistungsübertragungspfad 93". Der Leistungsübertragungspfad 93" weist einen Koppelradsatz 95 auf. Genauer gesagt ist die Maschinenausgangswelle 91 fest mit einem Antriebszahnrad 92 verbunden. An einer Nebenwelle 96 ist ein Nebenzahnrad 98 festgelegt, das mit dem Antriebszahnrad 92 in Eingriff steht. Ferner ist parallel zu der Nebenwelle 96 eine Zwischen-Welle 100 vorgesehen, an der ein erstes Zwischen-Zahnrad 102 und ein zweites Zwischen-Zahnrad 104 gelagert sind. Das erste Zwischen-Zahnrad 102 steht in Eingriff mit dem Nebenzahnrad 98. Das zweite Zwischen-Zahnrad 104 steht in Eingriff mit dem Koppelzahnrad 68 (bzw. 50).

Bei dieser Ausgestaltung ist eine Rutschkupplung 94' an der Zwischen-Welle 100 ausgebildet, und zwar vorzugsweise zwischen dem ersten Zwischen-Zahnrad 102 und der Zwischen-Welle 100. Alternativ kann die Rutschkupplung auch zwischen dem Nebenzahnrad 98 und der Nebenwelle 96 ausgebildet sein, oder zwischen dem Antriebszahnrad 92 und der Maschinenausgangswelle 91.

Konstruktive Beispiele derartiger Rutschkupplungen sind in den nachfolgenden Fig. 3 bis 5 beschrieben, wobei diese Ausführungsformen jeweils mit den oben beschriebenen Getriebeanordnungen 16 kombinierbar sind.

In Fig. 3 ist eine Rutschkupplung 94" gezeigt, die zwischen einer Zwischen-Welle 100 und einem ersten Zwischen-Zahnrad 102 eingerichtet ist. Das erste Zwischen-Zahnrad 102 ist drehbar an der Zwischen-Welle 100 gelagert, beispielsweise mittels eines Nadellagers 105. Die Zwischen-Welle 100 ist bei dieser Ausführungsform drehfest mit einem zweiten Zwischen-Zahnrad 104 verbunden, und kann insbesondere einstückig hiermit ausgebildet sein.

Die Rutschkupplung 94" beinhaltet eine erste Reibpaarung 106, die zwischen dem ersten Zwischen-Zahnrad 102 und einem ersten Reibkonusring 108 eingerichtet ist. Der erste Reibkonusring 108 bildet dabei ein erstes Drehmomentübertragungsglied, und das erste Zwischen-Zahnrad 102 bildet hierbei ein zweites Drehmomentübertragungsglied. Die erste Reibpaarung 106 beinhaltet einen ersten Reibkonus 110 an einem Außenumfangsabschnitt des ersten Reibkonusringes 108 sowie einen zweiten Reibkonus 112 an einem Innenumfangsabschnitt des ersten Zwischen-Zahnrades 102. Der erste Reibkonusring 108 ist drehfest mit der Zwischen-Welle 100 verbunden, jedoch begrenzt axial verschieblich in Bezug auf diese gelagert, beispielsweise mittels einer Steckverzahnung oder dergleichen.

Die Rutschkupplung 94" beinhaltet ferner eine weitere Reibpaarung 106A mit einem weiteren Reibkonusring 108A, an dessen Außenumfang ein weiterer erster Reibkonus 110A ausgebildet ist. An dem ersten Zwischen-Zahnrad 102 ist innenumfänglich ein weiterer zweiter Reibkonus 112A ausgebildet, der mit dem weiteren ersten Reibkonus 110A die weitere Reibpaarung 106A bildet.

Die Reibpaarungen 106, 106A sind an axial gegenüberliegenden Enden des ersten Zwischen-Zahnrades 102 ausgebildet. Die Winkel der Reibkoni liegen vorzugsweise in einem Bereich zwischen 3° und 20°, insbesondere in einem Bereich zwischen 5° und 10°, und sind in entgegengesetzter Richtung geneigt, ähnlich einer X-Anordnung bei Lagern.

Der weitere Reibkonusring 108A ist über einen Axialsicherungsring 114 in axialer Richtung in Bezug auf die Zwischen-Welle 100 gesichert. Zwischen dem ersten Reibkonusring 108 und einem mit der Zwischen-Welle 100 verbundenen Radialabschnitt 118, der vorliegend gebildet ist durch einen Radialabschnitt des zweiten Zwischen-Zahnrades 104, ist eine Federeinrichtung 116 in Form eines Tellerfederpaketes 116 angeordnet. Mittels der axial wirkenden Federeinrichtung 116 sind die Reibpaarungen 106, 106a vorgespannt. Die Federkonstante der Federeinrichtung 106, in Verbindung mit den Winkeln der Reibpaarungen 106, 106A, sowie den verwendeten Materialien und Flächen der Reibpaarungen bestimmen den Drehmoment-Schwellenwert, der die Rutschkupplung 94" charakterisiert.

In Fig. 4 ist die gleiche Rutschkupplung 94" dargestellt, in diesem Fall jedoch angeordnet zwischen dem Antriebszahnrad 92 und der Maschinenausgangswelle 91, wobei an der Maschinenausgangswelle 91 ein Radialabschnitt 118 ausgebildet ist, der nicht notwendigerweise als Zahnrad ausgebildet ist. An dem Radialabschnitt 118 stützt sich die Federeinrichtung 116 der Rutschkupplung 94" ab.

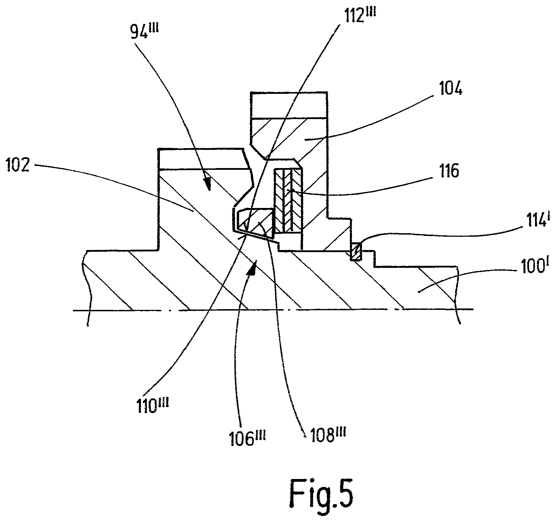

Fig. 5 zeigt eine weitere Variante einer Rutschkupplung 94"', die beispielsweise zwischen einem ersten Zwischen-Zahnrad 102 und einem zweiten Zwischen-Zahnrad 104 eingerichtet sein kann. Bei dieser Anordnung ist das erste Zwischen-Zahnrad 102 drehfest mit der Zwischen-Welle 100' verbunden. Das zweite Zwischen-Zahnrad 104 ist verdrehbar in Bezug auf die Zwischen-Welle 100' gelagert und über einen Axialsicherungsring 114' in axialer Richtung an der Zwischen-Welle 100' gesichert.

Die Rutschkupplung 94'" beinhaltet eine einzelne Reibpaarung 106"', die zwischen dem ersten Zwischen-Zahnrad 102 bzw. der Zwischen-Welle 100 und einem Reibkonusring 108'" eingerichtet ist. Der Reibkonusring 108''' weist an seinem Innenumfang einen ersten Reibkonus 110'" auf. Ein zweiter Reibkonus 112'" ist an einem Außenumfangsabschnitt der Zwischen-Welle 100' bzw. des ersten Zwischen-Zahnrades 102 ausgebildet. Eine Federeinrichtung 116 ist in axialer Richtung zwischen dem zweiten Zwischen-Zahnrad 104 und dem Reibkonusring 108'" angeordnet, um die Reibpaarung 106"' in axialer Richtung vorzuspannen.

Bei sämtlichen Varianten kann die Federeinrichtung 116 in einer axialen Aussparung eines Zahnrades angeordnet sein, wie es beispielsweise in den Fig. 3 und 5 dargestellt ist, um auf diese Weise eine Bauraumoptimierung zu erreichen.

Während die Reibkonusringe 108, 108A der Fig. 3 drehfest, jedoch axial verschieblich in Bezug auf die Zwischen-Welle 100 gelagert sind, ist der Reibkonusring 108''' sowohl verdrehbar als auch axial verschieblich in Bezug auf die Zwischen-Welle 100' gelagert.

## Patentansprüche

1. Hybrid-Kraftfahrzeuggetriebeanordnung (16) mit einem Zahnradgetriebe zur Einrichtung wenigstens einer Übersetzung (1-7, R) zwischen einem Getriebeeingang (24, 26) und einem Getriebeausgang (38, 40), wobei das Zahnradgetriebe einen Getrieberadsatz (68, 50, 58) mit einem Koppelzahnrad (68; 50) aufweist, mit einer elektrischen Maschine (90), die eine Maschinenausgangswelle (91) mit einem Antriebszahnrad (92) aufweist, das direkt oder über einen Koppelradsatz (95) mit dem Koppelzahnrad (68; 50) des Getrieberadsatzes (68, 50, 58) gekoppelt ist, derart, dass ein Leistungsübertragungspfad (93) von der Maschinenausgangswelle (91) zu dem Koppelzahnrad (68; 50) eingerichtet ist, wobei in dem Leistungsübertragungspfad (93) eine Rutschkupplung (94) angeordnet ist
**dadurch gekennzeichnet, dass**
die Rutschkupplung (94) wenigstens eine Reibkonuspaarung (106) aufweist, die einen ersten Reibkonus (110) an einem ersten Drehmomentübertragungsglied (108) und einen zweiten Reibkonus (112) an einem zweiten Drehmomentübertragungsglied (102; 92) aufweist, wobei das erste und das zweite Drehmomentübertragungsglied über eine Federeinrichtung (116) vorgespannt sind, wobei das erste Drehmomentübertragungsglied (108) ein Reibkonusring (108) ist, wobei das zweite Drehmomentübertragungsglied (102) ein Reibkonus-Zahnrad (102; 92) ist, insbesondere das Antriebszahnrad (92) oder ein Zahnrad (102) des Koppelradsatzes (95).

2. Hybrid-Kraftfahrzeuggetriebeanordnung nach Anspruch 1, **dadurch gekennzeichnet, dass** die Rutschkupplung (94) als Überlast-Schutzkupplung ausgebildet ist, derart, dass die Rutschkupplung (94) Drehmoment bis zu einem Drehmoment-Schwellenwert übertragen kann, der eine Funktion eines charakteristischen Drehmomentwertes der elektrischen Maschine (90) ist.

3. Hybrid-Kraftfahrzeuggetriebeanordnung nach Anspruch 1 oder 2, **dadurch gekennzeichnet, dass** die Rutschkupplung (94) als Überlast-Schutzkupplung ausgebildet ist, derart, dass die Rutschkupplung (94) Drehmoment bis zu einem Drehmoment-Schwellenwert übertragen kann, der eine Funktion eines Koppelzahnrad-Maximaldrehmomentes ist.

4. Hybrid-Kraftfahrzeuggetriebeanordnung nach Anspruch 2 oder 3, **dadurch gekennzeichnet, dass** zwischen der Maschinenausgangswelle (91) und dem Koppelzahnrad (68; 50) eine Koppel-Übersetzung eingerichtet ist, wobei der Drehmoment-Schwellenwert eine Funktion der Koppel-Übersetzung ist.

5. Hybrid-Kraftfahrzeuggetriebeanordnung nach Anspruch 1, **dadurch gekennzeichnet, dass** der Reibkonusring (108) drehfest mit einem Wellenabschnitt (100; 91) verbunden ist.

6. Hybrid-Kraftfahrzeuggetriebeanordnung nach Anspruch 5, **dadurch gekennzeichnet, dass** das Reibkonus-Zahnrad (102; 92) zwei Reibkoni (112; 112A) aufweist, denen jeweils ein drehfest mit dem Wellenabschnitt (100; 91) verbundener Reibkonusring (108; 108A) zugeordnet ist.

7. Hybrid-Kraftfahrzeuggetriebeanordnung nach Anspruch 6, **dadurch gekennzeichnet, dass** einer der Reibkonusringe (108; 108A) axial an dem Wellenabschnitt (100; 91) gesichert ist, wobei die Federeinrichtung (116) zwischen dem anderen Reibkonusring und einem mit dem Wellenabschnitt (100; 91) verbundenen Radialabschnitt (118) angeordnet ist.

8. Hybrid-Kraftfahrzeuggetriebeanordnung nach einem der Ansprüche 1 - 7, **dadurch gekennzeichnet, dass** das Reibkonus-Zahnrad (92) ein an der Maschinenausgangswelle (91) gelagertes Antriebszahnrad (92) ist.

9. Hybrid-Kraftfahrzeuggetriebeanordnung nach einem der Ansprüche 1 - 7, **dadurch gekennzeichnet, dass** der Koppelradsatz (95) ein erstes Zwischen-Zahnrad (102) sowie ein zweites Zwischen-Zahnrad (104) aufweist, das koaxial zu dem ersten Zwischen-Zahnrad (102) angeordnet ist, wobei das Reibkonus-Zahnrad (102) das erste und/oder das zweite Zwischen-Zahnrad ist.

## Claims

1. Hybrid motor vehicle transmission assembly (16) with a gear train for setting up at least one transmission ratio (1-7, R) between a transmission input (24, 26) and a transmission output (38, 40), the gear train having a gearwheel set (68, 50, 58) with a coupling gearwheel (68; 50), with an electric machine (90) which has a machine output shaft (91) with a drive gearwheel (92) which is coupled directly or via a coupling gear set (95) to the coupling gearwheel (68; 50) of the gearwheel set (68, 50, 58), in such a way that a power transmission path (93) is set up from the machine output shaft (91) to the coupling gearwheel (68; 50), a slipping clutch (94) being arranged in the power transmission path (93), **characterized in that** the slipping clutch (94) has at least one frictional cone pairing (106) which has a first frictional cone (110) on a first torque transmission member (108) and a second frictional cone (112) on a second torque transmission member (102; 92), the first and the second torque transmission member being prestressed via a spring device (116), the first torque transmission member (108) being a frictional cone ring (108), the second torque transmission member (102) being a frictional cone gearwheel (102; 92), in particular the drive gearwheel (92) or a gearwheel (102) of the coupling gear set (95).

2. Hybrid motor vehicle transmission assembly according to Claim 1, **characterized in that** the slipping clutch (94) is configured as an overload protection clutch in such a way that the slipping clutch (94) can transmit torque up to a torque threshold value which is a function of a characteristic torque value of the electric machine (90).

3. Hybrid motor vehicle transmission assembly according to Claim 1 or 2, **characterized in that** the slipping clutch (94) is configured as an overload protection clutch in such a way that the slipping clutch (94) can transmit torque up to a torque threshold value which is a function of a coupling gearwheel maximum torque.

4. Hybrid motor vehicle transmission assembly according to Claim 2 or 3, **characterized in that** a coupling transmission ratio is set up between the machine output shaft (91) and the coupling gearwheel (68; 50), the torque threshold value being a function of the coupling transmission ratio.

5. Hybrid motor vehicle transmission assembly according to Claim 1, **characterized in that** the frictional cone ring (108) is connected fixedly to a shaft section (100; 91) so as to rotate with it.

6. Hybrid motor vehicle transmission assembly according to Claim 5, **characterized in that** the frictional cone gearwheel (102; 92) has two frictional cones (112; 112A) which are in each case assigned a frictional cone ring (108, 108A) which is connected fixedly to the shaft section (100; 91) so as to rotate with it.

7. Hybrid motor vehicle transmission assembly according to Claim 6, **characterized in that** one of the frictional cone rings (108; 108A) is secured axially on the shaft section (100; 91), the spring device (116) being arranged between the other frictional cone ring and a radial section (118) which is connected to the shaft section (100; 91).

8. Hybrid motor vehicle transmission assembly according to one of Claims 1 to 7, **characterized in that** the frictional cone gearwheel (92) is a drive gearwheel (92) which is mounted on the machine output shaft (91).

9. Hybrid motor vehicle transmission assembly according to one of Claims 1 to 7, **characterized in that** the coupling gear set (95) has a first intermediate gearwheel (102) and a second intermediate gearwheel (104) which is arranged coaxially with respect to the first intermediate gearwheel (102), the frictional cone gearwheel (102) being the first and/or the second intermediate gearwheel.

## Revendications

1. Système de transmission de véhicule hybride (16) comprenant une transmission par engrenage pour l'établissement d'au moins un rapport de transmission (1-7, R) entre une entrée de transmission (24, 26) et une sortie de transmission (38, 40), la transmission par engrenage comprenant un train d'engrenages (68, 50, 58) comprenant un engrenage d'accouplement (68 ; 50), comprenant une machine électrique (90), qui comprend un arbre de sortie de machine (91) comprenant un engrenage d'entraînement (92), qui est accouplé directement ou par l'intermédiaire d'un train d'engrenages d'accouplement (95) avec l'engrenage d'accouplement (68 ; 50) du train d'engrenages (68, 50, 58), de telle sorte qu'un trajet de transfert de puissance (93) soit établi depuis l'arbre de sortie de machine (91) jusqu'à l'engrenage d'accouplement (68 ; 50), un accouplement à glissement (94) étant agencé dans le trajet de transfert de puissance (93),
**caractérisé en ce que**
l'accouplement à glissement (94) comprend au moins un appariement de cônes de friction (106), qui comprend un premier cône de friction (110) sur un premier élément de transfert de moment de rotation (108) et un deuxième cône de friction (112) sur un deuxième élément de transfert de moment de rotation (102 ; 92), le premier et le deuxième élément de transfert de moment de rotation étant préchargés par l'intermédiaire d'un appareil à ressort (116), le premier élément de transfert de moment de rotation (108) étant un anneau de cône de friction (108), le deuxième élément de transfert de moment de rotation (102) étant un engrenage de cône de friction (102 ; 92), notamment l'engrenage d'entraînement (92) ou un engrenage (102) du train d'engrenages d'accouplement (95).

2. Système de transmission de véhicule hybride selon la revendication 1, **caractérisé en ce que** l'accouplement à glissement (94) est configuré sous la forme d'un accouplement de protection contre les surcharges, de telle sorte que l'accouplement à glissement (94) puisse transférer un moment de rotation jusqu'à une valeur seuil de moment de rotation, qui est une fonction d'une valeur de moment de rotation caractéristique de la machine électrique (90).

3. Système de transmission de véhicule hybride selon la revendication 1 ou 2, **caractérisé en ce que** l'accouplement à glissement (94) est configuré sous la forme d'un accouplement de protection contre les surcharges, de telle sorte que l'accouplement à glissement (94) puisse transférer un moment de rotation jusqu'à une valeur seuil de moment de rotation, qui est une fonction d'un moment de rotation maximal de l'engrenage d'accouplement.

4. Système de transmission de véhicule hybride selon la revendication 2 ou 3, **caractérisé en ce qu'**un rapport de transmission d'accouplement est établi entre l'arbre de sortie de machine (91) et l'engrenage d'accouplement (68 ; 50), la valeur seuil de moment de rotation étant une fonction du rapport de transmission d'accouplement.

5. Système de transmission de véhicule hybride selon la revendication 1, **caractérisé en ce que** l'anneau de cône de friction (108) est raccordé de manière immobilisée en rotation avec une section d'arbre (100 ; 91).

6. Système de transmission de véhicule hybride selon la revendication 5, **caractérisé en ce que** l'engrenage de cône de friction (102 ; 92) comprend deux cônes de friction (112 ; 112A), parmi lesquels au moins un est associé de manière immobilisée en rotation avec l'anneau de cône de friction (108 ; 108A) raccordé avec la section d'arbre (100 ; 91).

7. Système de transmission de véhicule hybride selon la revendication 6, **caractérisé en ce qu'**un des anneaux de cône de friction (108 ; 108A) est sécurisé axialement sur la section d'arbre (100 ; 91), l'appareil à ressort (116) étant agencé entre l'autre anneau de cône de friction et une section radiale (118) raccordée avec la section d'arbre (100 ; 91).

8. Système de transmission de véhicule hybride selon l'une quelconque des revendications 1 à 7, **caractérisé en ce que** l'engrenage de cône de friction (92) est un engrenage d'entraînement (92) monté sur l'arbre de sortie de machine (91).

9. Système de transmission de véhicule hybride selon l'une quelconque des revendications 1 à 7, **caractérisé en ce que** le train d'engrenages d'accouplement (95) comprend un premier engrenage intermédiaire (102), ainsi qu'un deuxième engrenage intermédiaire (104), qui est agencé coaxialement au premier engrenage intermédiaire (102), l'engrenage de cône de friction (102) étant le premier et/ou le deuxième engrenage intermédiaire.
